# FASCICULE DE BREVET EUROPEEN

(11) **EP 0 550 314 B1**
(45) Date de publication et mention de la délivrance du brevet: **13.11.1996**
(21) Numéro de dépôt: 92403480.4
(22) Date de dépôt: 21.12.1992
(51) Int. Cl.: C08G 69/36, C08L 77/10

(54) **Polyamides et objets obtenus à partir de ceux-ci**
Polyamiden und daraus hergestellter Gegenstände
Polyamides and objects obtained therefrom

(30) Priorité: 31.12.1991 FR 9116405
(43) Date de publication de la demande: 07.07.1993
(73) Titulaire: ELF ATOCHEM S.A., 92800 Puteaux (FR)
(72) Inventeur: Sage, Jean-Marc, F-27470 Serquigny (FR); Blondel, Philippe, F-27300 Bernay (FR); Maj, Philippe, W-5340 Bad Honnes (DE); Judas, Didier, F-75017 Paris (FR)
(74) Mandataire: Hirsch, Marc-Roger

(56) Documents cités:
- EP-A- 0 299 444
- DE-A- 1 961 746
- PATENT ABSTRACTS OF JAPAN vol. 11, no. 394 (C-465)(2841) 23 Décembre 1987 ; & JP-A-62 156 139

## Description

La présente invention a pour objet de nouveaux polyamides, de nouvelles compositions les contenant ainsi que les objets, tels que moulés, obtenus à partir de ceux-ci.

Les polyamides sont couramment utilisés dans divers types d'industrie. Des propriétés améliorées tant mécaniques que chimiques sont recherchées pour les objets obtenus à partir de polyamides, mais les exigences économiques de faisabilité à l'échelle industrielle demeurent. Ainsi, il est recherché des polyamides présentant un point de fusion Tf élevé, donc utilisables à des hautes températures, présentant par ailleurs de bonnes propriétés mécaniques, une bonne tenue aux divers solvants et autres. Ces polyamides doivent aussi facilement conduire à des objets moulés, et ce à l'échelle industrielle.

Afin que le polymère puisse développer ses propriétés lors du moulage, spécialement dans le cas des matériaux cristallins ou semi-cristallins, il est préférable que la température de transition vitreuse (Tg) ne soit pas trop élevée par rapport à la température du moule; de plus, il est préférable que le matériau présente une vitesse de cristallisation rapide, en effet si la vitesse de cristallisation est trop lente, lors du moulage, le matériau ne présentera pas ses propriétés optimales. La température Tg inférieure à environ 130°C est une condition dictée par le moulage, à l'échelle industrielle, qui utilise, en tant que fluide caloporteur dans les moules, de l'eau. En outre, plus la Tg est faible, moins élevée est la consommation énergétique. Ainsi, il est recherché dans l'industrie des polyamides dont la Tg est inférieure à 130°C, la Tf est supérieure à 250°C, présentant une vitesse de cristallisation (Tc) suffisamment rapide afin que le polymère puisse développer ses propriétés lors des opérations de moulage, et dont les propriétés mécaniques, chimiques et de faisabilité en réacteur sont par ailleurs élevées.

Parmi les moyens connus dans la littérature permettant d'accélérer cette cristallisation, on peut citer l'ajout d'agent nucléant, comme par exemple le talc, afin d'accélérer cette cristallisation. Cependant, l'adjonction de ces agents nucléants peut présenter des inconvénients, notamment en diminuant la résistance au choc ou l'allongement à la rupture du polymère.

Le brevet ICI FR 2 123 534 revendique des polyamides qui peuvent comprendre, en poids:
. 10 à 80% de motif 6,T
. 1 à 70% de motif 12
. 10 à 80% de motif 6
Néanmoins, ce brevet ne donne comme exemple que des polyamides dans lesquels la teneur en motif 6,T est faible (10 et 18,5% en poids), lesdits polymères présentant donc des points de fusion peu élevés. Ceux-ci sont donc peu appropriés aux emplois industriels pour lesquels une Tf élevée est recherchée, ladite Tf étant directement fonction de la teneur en motif 6,T.

Le brevet MITSUI JP 62 156130 décrit et revendique des polyamides statistiques comprenant, en mole:
. 60 à 90% de 6,T
. 5 à 40% de 12
. 0 à 35% de 6,I
et présentant un débit d'écoulement (MFR: Mean Flow Rate) supérieur à 0,1 g/mn (10 kg à 360°C).

Ce brevet enseigne que, pour des teneurs en 6,T inférieures à 60% en mole et concouramment des teneurs en motif aliphatique excédant 40% en mole, le polyamide perd une partie de ses propriétés, telle que l'abaissement du point de fusion, l'abaissement de la température de déformation (HDT) pour le polymère chargé, etc.

On connaît par ailleurs des copolyamides du type 6-6,T (cf. brevet BASF EP-A-299444), ainsi que les homopolyamides à base de motifs 6, 12 et 11. La température de fusion Tf de l'homopolymère à base de motif 6 est supérieure d'environ 30°C à celle de l'homopolymère 12 ou 11, tandis que les températures de transition vitreuse Tg des homopolymères 6, 12 et 11 sont sensiblement identiques, à quelques °C près. Le copolyamide 6/6,T, pour des teneurs en motifs 6,T de l'ordre de 50%, a une température de fusion Tf de l'ordre de 200 à 230°C et une Tg de l'ordre de 90°C. Donc, le remplacement dans des copolymères 6-6,T, avec un pourcentage en masse de motif 6,T inférieur à 60%, du composant 6 par un composant du type -HN-(CH₂)ₙ-Co-, n compris entre 6 et 14, typiquement 12 (ou 11) conduirait à priori à des copolymères ayant une Tg similaire, mais dont la Tf serait diminuée.

De façon surprenante, il a été trouvé par la demanderesse qu'une température de fusion élevée, c'est-à-dire une Tf supérieure à 250°C, ainsi qu'une température de transition vitreuse Tg inférieure à celle des copolyamides 6-6,T, c'est-à-dire inférieure à environ 120°C, et de bonnes propriétés mécaniques et chimiques peuvent être obtenues grâce aux polyamides selon la présente invention.

De plus, les polyamides selon la présente invention présentent une cristallisation plus rapide que les copolyamides de type 6/6,T ou 6,I/6,T bien connus. La vitesse de cette cristallisation est ici observée par l'écart mesuré entre la température de fusion (Tf) du polymère et sa température de cristallisation (Tc). Pour les polymères, l'écart observé entre la température de cristallisation et la température de fusion (soit Tf-Tc) est significative de la rapidité du polymère à cristalliser. Plus la cristallisation est rapide, plus l'écart Tf-Tc est faible (à vitesse de chauffe ou de refroidissement comparables lors des mesures). On peut donner comme support les pages 890 et 891 de "Comprehensive Polymer Science", Pergamon Press Volume 1, et les références qui y sont citées (notamment H.N. BECK J. Appl. Polym. Sci. 1975 (19), p. 371).

La figure 1 représente un diagramme ternaire de composition d'un polyamide selon la présente invention.

La figure 2 représente un diagramme ternaire de composition d'un autre polyamide selon l'invention.
Les numéros dans les figures se réfèrent aux exemples.

Ainsi, la présente invention fournit un polyamide comprenant, en masse:
a) 45 à 75% de motif x,T, x étant compris entre 4 et 12, bornes incluses, ledit motif x,T étant le produit de condensation d'une diamine ayant x atomes de carbone et d'acide téréphtalique; et
b) 55 à 25% de motif aliphatique -NH-(CH₂)ₙ-Co, n étant compris entre 6 et 14.
Le terme "x,T" tel qu'utilisé dans la présente description signifie le motif obtenu à partir d'un mélange sensiblement stoechiométrique de la diamine H₂N-(CH₂)ₓ-NH₂ -correspondant à "x"- et d'acide térephtalique -correspondant à "T"-. Par "sensiblement stoechiométrique", on entend un rapport molaire "x"/"T" compris entre 1/1,05 et 1,05/1. "x,T" est ci-après désigné aussi comme "produit de la condensation d'une diamine à x carbones et d'acide térephtalique". Des mélanges de ces motifs sont aussi envisagés dans la présente invention. Le motif aliphatique -HN-(CH₂)ₙ-CO est dérivé d'un lactame ou de l'acide α,ω-aminocarboxylique correspondant contant n+1 atomes de carbone dans la chaîne carbonée. Des mélanges de ces motifs sont aussi envisagés dans la présente invention. Le terme "compris entre" tel qu'utilisé dans la présente description inclut les bornes de l'intervalle précité.

Selon un mode de réalisation préféré de la présente invention, le polyamide comprend, en masse:
a) 55 à 70% de motif x,T, x étant compris entre 4 et 12; et
b) 45 à 30% de motif aliphatique -HN-(CH₂)ₙ-CO, n étant compris entre 6 et 14.
De préférence, dans le motif x,t, x est compris entre 6 et 9. Avantageusement, ce motif x,T est le motif 6,T qui provient de la condensation de l'hexaméthylènediamine (HMDA) avec l'acide térephtalique.
De préférence, dans le motif aliphatique -HN-(CH₂)ₙ-CO, n est compris entre 7 et 11. Avantageusement, ce motif aliphatique est le motif 12 et/ou 11.
Le terme "12" ou "11" tel qu'utilisé dans la présente description signifie le motif aliphatique obtenu à partir, en tant que précurseur, d'acide α,ω-aminocarboxylique ou du lactame correspondant. Ainsi, le motif 12 provient de l'acide 12-amino-dodécanoïque ou du lactame correspondant, c'est-à-dire le lauryllactame ou lactame 12 (L12), et le motif 11 provient de l'acide 11-amino-undécanoïque. Des mélanges de ces deux motifs aliphatiques sont aussi envisagés.

Selon un mode de réalisation préférée de la présente invention, le motif aliphatique est le motif 12. Celui-ci provient avantageusement du lactame correspondant, c'est-à-dire le lauryllactame L12, en tant que précurseur.

Ainsi le polyamide préféré selon la présente invention est le polyamide 12(11)-6,T.

Les présents polyamides peuvent comprendre d'autres motifs monomères c). Ces motifs monomères c) sont présents en lieu et place d'une partie du motif aliphatique b). Ainsi, la présente invention a aussi pour objet le polyamide caractérisé en ce qu'il comprend un tiers monomère remplaçant en partie le motif aliphatique, ledit motif aliphatique étant présent en une proportion d'au moins 10% en masse, sur la base du poids total de la composition polyamide finale. De préférence, le motif aliphatique est présent en une proportion d'au moins 15% en masse, sur la base du poids total de la composition polyamide finale.

Selon un mode de réalisation de la présente invention, le motif c) est le motif 6,I. Le motif 6,I est présent en une proportion jusqu'à 45% en masse, sur la base du poids total de la composition polyamide finale. De préférence, la proportion dudit motif 6,I est jusque 30% en masse, sur la base du poids total de la composition polyamide finale.

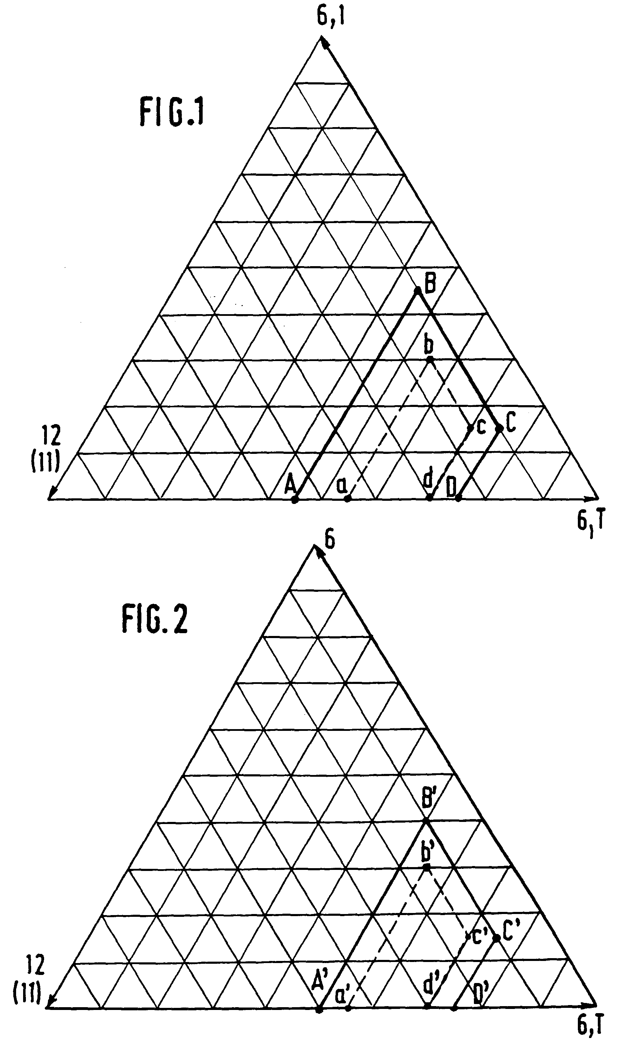

La figure 1 est un diagramme ternaire d'un terpolymère 12-6,T-6,I selon la présente invention. Le point représentatif est situé dans la zone ABCD, de préférence abcd, de ladite figure 1.
Le terme "6,I" tel qu'utilisé dans la présente description signifie le motif obtenu à partir d'un mélange sensiblement stoechiométrique de HMDA ("6") et d'acide isophtalique ("I").

Selon un autre mode de réalisation de la présente invention, le motif c) est le motif 6. Le motif 6 est présent en une proportion jusqu'à 40% en masse, le motif x,T étant présent en une proportion d'au moins 50% en masse, sur la base du poids total de la composition polyamide finale. De préférence, la proportion dudit motif 6 est jusque 30% en masse, sur la base du poids total de la composition polyamide finale.
La figure 2 est un diagramme ternaire d'un terpolymère 12-6,T-6 selon la présente invention. Le point représentatif est situé dans la zone A'B'C'D', de préférence a'b'c'd', de ladite figure 2.
Le terme "6" tel qu'utilisé dans la présente description signifie le motif aliphatique obtenu à partir d'acide 6-aminohexanoïque ou du lactame correspondant, c'est-à-dire l'ε-caprolactame L6. Le précurseur préféré est le caprolactame L6.

Les polyamides peuvent aussi comprendre les additifs habituels des polyamides tels que: stabilisants à la lumière et à la chaleur, colorants, azurants optiques, plastifiants, agents de démoulage, agents d'ignifugation et autres.
Les polyamides selon la présente invention peuvent également être mélangés avec d'autres homo- ou co-polyamides, ajoutés en une proportion jusqu'à 100% par rapport au polyamide selon la présente invention.

Les polyamides selon la présente invention peuvent également être mélangés avec d'autres polymères, par exemple les copolymères de l'éthylène, l'anhydride maléique et les acrylates de méthyle, éthyle ou butyle par exemple, ces copolymères étant utilisés en général afin d'améliorer les propriétés de résistance aux chocs à des teneurs de l'ordre de 1 jusqu'à 40% en masse.

On peut également ajouter des agents nucléants connus de l'homme de l'art, comme le talc, généralement à des teneurs de 0,1 à 15% en poids. On peut se référer au brevet U.S. 3 755 221 de HITCH (28 août 1973) qui décrit des agents nucléants pour des polyamides 6,6.

La présente invention a aussi pour objet les compositions contenant les polyamides précités en association avec une charge présente en une quantité jusqu'à 200%, de préférence de 10 à 60%, en poids par rapport au présent polyamide. Des charges envisagées dans le cadre de la présente invention incluent les charges minérales classiques, telles que les charges choisies dans le groupe, donné à titre non-limitatif, comprenant: kaolin, magnésie, scories, etc., fibres de verre. La charge utilisée plus généralement est formée de fibres de verre, dont la dimension est avantageusement comprise entre 0,20 et 25 mm. On peut y inclure un agent de couplage pour améliorer l'adhésion des fibres au polyamide, tels que les silanes ou les titanates qui sont connus de l'homme de l'art. Des charges anioniques peuvent également être utilisées, telles que le graphite ou les fibres aramides (polyamides entièrement aromatiques).

La présente invention a également pour objet les articles obtenus à partir des polyamides ou compositions précitées.

Selon un mode de réalisation préféré de la présente invention, l'article est un article obtenu par moulage, avantageusement par moulage-injection.

Les polyamides selon la présente invention peuvent être obtenus par tous procédés de préparation des polyamides appropriés.

Des exemples non limitatifs de procédés de préparation sont donnés ci-après, lesquels sont rapportés à l'HMDA en tant que diamine. La description est donnée en référence au motif 6,T, à des fins d'illustration et en aucun cas ne doit être considérée limitativement.

Selon un premier procédé suivant la présente invention, ledit procédé comprend l'étape unique de réaction entre l'acide térephtalique et, éventuellement, l'acide isophtalique, avec le précurseur du motif aliphatique et, éventuellement celui du motif 6, et la HMDA. Les conditions opératoires sont une température de 250 à 360°C, de préférence 280 à 320°C, une atmosphère inerte, une pression de 0,01 à 50 bar, de préférence 10 à 35, et un temps de réaction de 30 minutes à 10 heures.

Selon un second procédé suivant la présente invention, ledit procédé comprend les étapes de:
- réaction entre l'acide térephtalique, et éventuellement l'acide isophtalique, avec le précurseur du motif aliphatique, et éventuellement celui du motif 6; et
- réaction de l'oligomère diacide ainsi formé avec la HMDA.

Dans la première étape de réaction, on prépare l'oligomère diacide par condensation de l'acide téréphtalique, ou éventuellement de son mélange avec l'acide isophtalique, avec le précurseur du motif aliphatique. Ce précurseur peut être l'acide 12-amino-dodécanoïque, 11-amino-undécanoïque ou le lauryl-lactame 12. La réaction s'effectue en réacteur sous atmosphère inerte, à pression atmosphérique et/ou sous pression en maintenant les réactifs, de préférence sous agitation, à une température comprise entre 150 et 350°C, et de préférence comprise entre 240 et 300°C. La réaction s'effectue généralement en 1 à 5 heures sous pression atmosphérique ou sous pression maximale de 50 bar.

Dans la seconde étape, on ajoute sous pression atmosphérique, à l'oligomère diacide formé, la diamine, par exemple HMDA que l'on fait réagir à une température comprise entre 260 et 350°C, de préférence 240 et 300°C. La réaction s'effectue généralement en atmosphère inerte en 1 à 10 heures sous vide et/ou pression atmosphérique et/ou pression maximum de 50 bar. Les rapports molaires HMDA/acide térephtalique, éventuellement mélangé avec l'acide isophtalique, varient entre 1/0,90 et 0,90/1.

Selon un troisième procédé de préparation suivant la présente invention, ledit procédé comprend les étapes de:
a) réaction entre l'acide térephtalique, et éventuellement l'acide isophtalique, et le précurseur du motif aliphatique de 10 à 99% et de préférence de 35 à 75% en poids de la diamine HMDA; et
b) réaction du produit ainsi formé avec le solde de HMDA.

Dans les deux étapes, la température est comprise entre 240 et 350°C, de préférence 280 et 330°C. Le procédé est mis en oeuvre sous atmosphère inerte, sous pression jusque 50 bar ou à pression atmosphérique, ou sous vide. La réaction s'effectue généralement en 1 à 10 heures.

Dans les procédés selon la présente invention, il est possible d'utiliser, de préférence au cours de la seconde étape en ce qui concerne les deux derniers procédés, les catalyseurs connus de polyamidification, tels que les acides phosphorique et hypophosphoreux.

Au cours de la seconde étape, il est possible d'ajouter au milieu réactionnel les charges ou additifs habituels précédemment cités.

Un quatrième procédé de préparation selon la présente invention comprend une première étape de polymérisation jusqu'à un degré d'avancement compris entre 40 et 99%, suivie d'une seconde étape consistant en une remontée en viscosité. La première étape peut être mise en oeuvre selon un procédé classique, par exemple l'un des trois procédés précités. A l'issue de cette étape, le prépolymère peut être transféré directement dans une machine de type extrudeuse ou bien un réacteur horizontal qui permettent des temps de séjour variant de 5 minutes à 1 heure, de préférence 15 à 45 minutes, afin de subir une remontée en viscosité. Le transfert peut également être effectué via la récupération du prépolymère solide sous forme de granulé ou de poudre.

La présente invention est illustrée à l'aide des exemples suivants, non limitatifs de la portée de celle-ci susceptible de variantes aisément accessibles à l'homme de l'art.

Dans les exemples suivants, la détermination des points de fusion est fournie par analyse DSC - l'analyse DSC est effectuée par un appareil PERKIN ELMER DSC4. L'échantillon subit un premier cycle thermique de la température ambiante à 350°C à 20°C/mn, suivi d'un refroidissement à 40°C/mn jusqu'à température ambiante; lors de ce refroidissement, on note la température de cristallisation Tc au maximum du pic exotherme. Un deuxième cycle thermique de montée en température est alors effectué (20°C/mn). Les points de fusion et température de transition vitreuse sont déterminés à partir de ce deuxième cycle. La température de transition vitreuse étant déterminée au point d'inflexion et la température de fusion étant donnée par le minimum du pic endotherme de fusion observé.

Dans les exemples suivants, la viscosité inhérente est mesurée à 25°C dans le métacrésol avec une concentration initiale de 0,5 g de polymère pour 100 g de métacrésol. Elle est exprimée en dl/g.

Les tests mécaniques sont mis en oeuvre sur des éprouvettes obtenues par injection, le polymère sous forme de granulés étant préalablement séché en étuve pendant 8 heures sous vide à 80°C avant injection. Les éprouvettes subissent un conditionnement standard de 14 jours à 23°C sous air à 50% d'humidité relative avant analyse.

Les résultats des exemples 1 à 15 sont reportés dans le tableau A ci-après.

### EXEMPLE 1

On utilise un réacteur en verre (hauteur 200 mm, diamètre 40 mm) muni d'un agitateur à ancre en verre. Le réacteur est muni d'une colonne vigreux suivi d'un réfrigérant droit permettant la collecte de l'eau de condensation dans une éprouvette graduée. Les réactifs sont introduits dans le réacteur sous forme de poudre, de façon générale, on laisse ensuite le réacteur chargé sous un léger balayage d'azote pendant 30 à 60 mn afin d'éliminer les traces d'oxygène. On diminue ensuite le débit d'azote afin de maintenir simplement le réacteur sous azote (bulle à bulle).

On introduit 27,95 g d'acide amino-12-dodécanoïque, 16,6 g d'acide térephtalique et 12 g d'HMDA.

On plonge le réacteur dans le bain chauffant maintenu à 250°C, après 5 mn, on met l'agitation à 25 tr/mn, le milieu réactionnel est alors pâteux. On porte ensuite de façon progressive la température à 300°C à environ 1°C/mn. A 260°C, le milieu devient plus fluide et l'on augmente l'agitation à 100 tr/mn. Pendant cette montée en température, on observe la distillation des effluents de polycondensation, le milieu devient progressivement plus transparent (fusion complète) et sa viscosité augmente. Vers 300°C, le milieu a la consistance d'une pâte très épaisse, l'agitation est baissée au bout de 20 mn à 300°C (25 tr/mn), puis maintenue pendant encore 20 mn au bout desquelles l'on n'observe plus visuellement d'évolution du milieu. La réaction est alors arrêtée. Le volume total des effluents est de 6 ml (5,76 ml d'eau en théorie).

Le polymère obtenu possède une température de transition vitreuse de 68°C et une température de fusion de 267°C.

### EXEMPLE 2

On introduit 21,5 g d'acide amino-12-dodécanoïque, 16,6 g d'acide térephtalique et 12 g d'HMDA dans le réacteur de l'exemple 1.

On plonge le réacteur dans le bain chauffant maintenu à 240°C, après 10 mn, on met l'agitation à 25 tr/mn, le milieu réactionnel est alors pâteux. On porte ensuite la température à 260°C, le milieu devient alors plus fluide et l'on augmente l'agitation à 100 tr/mn, la réaction est maintenue ainsi pendant 20 mn à 260°C. La température du bain est ensuite augmentée progressivement jusqu'à 300°C sur une période de 30 mn. Pendant cette montée en température, on observe la distillation des effluents de polycondensation, le milieu devient progressivement plus transparent, et sa viscosité augmente. Vers 300°C, le milieu a la consistance d'une pâte très épaisse. L'agitation est baissée (25 tr/mn). La température du bain est encore augmentée jusqu'à 310°C sur 15 mn au bout desquelles la réaction est arrêtée. Le volume total des effluents est de 5,5 ml (5,4 ml d'eau en théorie).

Le polymère obtenu possède une viscosité inhérente de 0,71, une température de transition vitreuse de 73°C et une température de fusion de 276°C.

### EXEMPLE 3

On introduit 25,8 g d'acide amino-12-dodécanoïque, 16,6 g d'acide térephtalique et 12 g d'HMDA dans le réacteur de l'exemple 1.

On plonge le réacteur dans le bain chauffant maintenu à 240°C, après 10 mn, on met l'agitation à 25 tr/mn, le milieu réactionnel est alors pâteux. On porte ensuite la température à 280°C, le milieu devient alors plus fluide et l'on augmente l'agitation à 50 tr/mn, la réaction est maintenue ainsi pendant 10 mn à 280°C. La température du bain est ensuite augmenté progressivement jusqu'à 300°C sur une période de 10 mn. Pendant cette montée en température, on observe la distillation des effluents de polycondensation, le milieu devient progressivement plus transparent (fusion complète) et sa viscosité augmente. Vers 300°C, le milieu a la consistance d'une pâte très épaisse, l'agitation est baissée (25 tr/mn). Le bain chauffant est maintenu à 300°C pendant 45 mn au bout desquelles l'on n'observe plus visuellement d'évolution du milieu, la réaction est alors arrêtée. Le volume total des effluents est de 6 ml (5,76 ml d'eau en théorie).

Le polymère obtenu possède une viscosité inhérente de 0,87, une température de transition vitreuse 71°C et une température de fusion de 275°C (on détecte sur la trace DSC un autre minimum de température de fusion à 255°C).

### EXEMPLE 3.1

Dans un autoclave de 50 l, on charge 5,94 kg de lactame 12, 4,16 kg d'acide térephtalique et 1,49 kg d'HMDA (pureté 97%) (soit 50% de la stoechiométrie). Le réacteur fermé est porté à 280°C puis maintenu à cette température pendant 90 mn sous une agitation fixée à 30 tr/mn, la pression s'établit à 17 bar dans le réacteur. Après ce maintien à 280C°, on effectue une détente du réacteur en isotherme (280°C) jusqu'à une pression de 0,5 bar, cette détente est effectuée progressivement sur 60 mn. Le restant de la diamine est alors introduite dans le réacteur au moyen d'une pompe, soit 1,49 kg d'HMDA. La pression dans le réacteur remonte alors pour se stabiliser à 15 bar sous 280°C. Cette opération (introduction de la diamine et stabilisation du réacteur à 280°C, 15 bar) dure 50 mn. On maintient encore le mélange réactionnel à 280°C, 15 bar, pendant 90 mn. Ensuite, on effectue une détente de la pression conjointement à une augmentation de la température matière, on passe alors de 280°C à 317°C et de 15 bar à la pression atmosphérique de façon progressive en 65 mn. Le couple de l'agitateur monte et le polymère est sorti du réacteur 6 mn après la fin de cette détente. Sa viscosité inhérente est de 1,2 et son MFI (Melt Flow Index) est de 4,1 g/10 mn à 300°C/2,16 kg (filiètre 2,095 mm de diamètre).

### EXEMPLES 4 A 6

On opère dans les conditions de l'exemple 3 pour des copolyamides de composition massique en 12/6,T: 39/61, 40/60, 55/45 respectivement.

### EXEMPLE 7

Cet essai est effectué en utilisant la technique de polycondensation par remontée en viscosité d'un prépolymère à l'état solide en présence de catalyseur phosphorique.

On effectue dans un premier temps la synthèse d'un prépolymère possédant un degré d'avancement de la réaction d'environ 60%. Le produit est ensuite refroidi et broyé puis subi un traitement thermique sous courant d'azote à une température inférieure à son point de fusion.

Dans le réacteur en verre, on charge 12,9 g (0,06 mole) d'acide amino-12-dodécanoïque, 16,6 g d'acide térephtalique (0,1 mole), 12 g (0,103 mole) d'HMDA et 0,1 g d'acide phosphorique à 85%. Le tube est plongé dans le bain chauffé à 220°C. La température est porté rapidement à 260°C (10 mn), l'agitation est mise alors à 25 tr/mn. On monte alors jusqu'à 300°C en 20 mn. Pendant cette montée en température, on observe la fusion des monomères et un dégagement d'eau de polycondensation. La réaction est arrêtée lorsque l'on atteint 300°C. On a recueilli alors 3,0 ml d'eau (soit 60% des 4,7 ml d'effluents théoriques).

L'analyse DSC montre une température de transition vitreuse de 81,5°C et une température de fusion de 315°C (le point de fusion lors de la première chauffe en DSC est de 275°C).

35 g du produit obtenu sont alors refroidis puis broyés sur un broyeur de laboratoire pour obtenir une poudre. On reprend cette poudre dans un réacteur en verre que l'on maintient sous agitation (25 tr/mn) et sous courant d'azote (environ 60 l/h). Le réacteur est plongé dans le bain maintenu à 210°C. On effectue alors une montée en température rapide jusqu'à 260°C (10 mn) puis une montée plus lente jusqu'à 290°C (15 mn). Un palier est observé à la température de 290°C pendant 90 mn. Au bout de ce temps, on recueille un volume supplémentaire de 1,2 ml d'effluents (1,5 en théorie), la réaction est arrêtée.

L'analyse DSC montre un point de fusion de 313°C et une température de transition vitreuse de 91°C.

Une deuxième opération est effectuée, le produit obtenu (poudre grossière) est ressoumis à une température de 290°C pendant 180 mn sous azote de la même façon que précédemment.

On obtient finalement une température de transition vitreuse de 93,7°C et un point de fusion de 315°C.

### EXEMPLES 8 ET 9

On opère dans les conditions de l'exemple 3 en remplaçant l'acide 12-amino-dodécanoïque par l'acide 11-aminoundécanoïque. Les copolyamides 11-6,T obtenus ont les compositions massiques suivantes: 40/60, 49/51, respectivement.

### EXEMPLE 10 (comparatif)

On opère dans les conditions des exemples 8 et 9, c'est-à-dire avec l'acide 11-aminoundécanoïque. Le polyamide obtenu a une composition massique de 60/40.

### EXEMPLES 11 A 15 (comparatifs)

On opère dans les conditions de l'exemple 3, pour des copolyamides 12/6,T de compositions massiques respectives: 60/40, 70/30, 80/20, 90/10 et 95/5.

**TABLEAU A**

| | % masse | | | | | | |
|---|---|---|---|---|---|---|---|
| Ex. | 12 | 6,T | Tg | Tf | Tc | Tf-Tc | ΔH cal/g |
| 1 | 51 | 49 | 68 | 267 | - | - | - |
| 2 | 44 | 56 | 73 | 276 | - | - | 3 |
| 3 | 50 | 50 | 71 | 275 | 220 | 55 | 3 |
| 3.1 | 50 | 50 | 77 | 277 | - | - | - |
| 4 | 39 | 61 | 81 | 290 | - | - | 10 |
| 5 | 40 | 60 | 74 | 288 | 247 | 41 | 8 |
| 6 | 55 | 45 | 66 | 250 | - | - | 4 |
| 7 | 32 | 68 | 94 | 315 | - | - | 6 |
| 8 (11) | 40 | 60 | 81 | 293 | - | - | 3 |

| | % masse | | | | | | |
|---|---|---|---|---|---|---|---|
| Ex. | 12 | 6,T | Tg | Tf | Tc | Tf-Tc | ΔH cal/g |
| 9 (11) | 49 | 51 | 73 | 271 | - | - | 4 |
| 10 (11) | 60 | 40 | 67 | 230 | - | - | 2 |
| 11 | 60 | 40 | 58 | 220-230 | - | - | 1 |
| 12 | 70 | 30 | 58 | amorphe | - | - | 0 |
| 13 | 80 | 20 | - | 147 | - | - | 6 |
| 14 | 90 | 10 | - | 161 | - | - | 9 |
| 15 | 95 | 5 | - | 170 | - | - | 11 |

### EXEMPLES 16 et 17 (comparatifs)

On opère dans les conditions opératoires de l'exemple 3, à l'exception du fait que de l'acide isophtalique est mélangé à l'acide térephtalique et que le motif alipahtique est absent. Les copolyamides 6,T/6,I obtenus ont des compositions massiques respectives: 50/50 et 60/40.

### EXEMPLES 18 A 23

On opère dans les conditions opératoires de l'exemple 3, à l'exception du fait que l'acide isophtalique est mélangé à l'acide térephtalique. Les pourcentages indiqués pour le motif 6,I sont en masse et basés par rapport au copolyamide 12-6,T-6,I final.

Les résultats des exemples 16 à 23 sont donnés dans le tableau B ci-après.

**TABLEAU B**

| Ex. | 12 | 6,T | 6,I | Tg | Tf | Tc | Tf-Tc | ΔH cal/g |
|---|---|---|---|---|---|---|---|---|
| 16 | 0 | 50 | 50 | 126 | 270 | 193 | 77 | 6-7 |
| 17 | 0 | 60 | 40 | 123 | 286 | 241 | 45 | 11,3 |
| 18 | 13 | 60 | 27 | 112 | 293 | 237 | 56 | 9,5 |
| 19 | 17 | 50 | 33 | 101 | 265 | 194 | 71 | 7 |
| 20 | 17 | 73 | 10 | ^{∼}100 | >320 | - | - | |
| 21 | 23 | 67 | 10 | ^{∼}100 | >320 | - | - | |
| 22 | 27 | 60 | 13 | 89 | 294 | 257 | 37 | 9,6 |
| 23 | 33 | 50 | 17 | 92 | 274 | 210 | 64 | 5,1 |

### EXEMPLES 24 A 27 (comparatifs)

On opère dans les conditions opératoires de l'exemple 3, à l'exception du fait que le motif 6 est introduit en lieu et place du motif 12. L'acide 12-aminododécanoïque est remplacé par de l'acide aminocaproique.

### EXEMPLES 28 A 30 (comparatifs)

On opère dans les conditions opératoires de l'exemple 3, en remplaçant le motif 12 partiellement par le motif 6. Les pourcentages indiqués pour le motif 6 sont en moles et basés par rapport au terpolyamide 12-6,T-6 final.

### EXEMPLES 31 A 34

On opère dans les conditions opératoires des exemples 28 à 30.

Les résultats des exemples 24 à 33 sont reportés dans le tableau C ci-après.

**TABLEAU C**

| Ex. | 12 | 6,T | 6,I | Tg | Tf | Tc | Tf-Tc | ΔH cal/g |
|---|---|---|---|---|---|---|---|---|
| 24 | - | 60 | 40 | 94 | 264 | 189 | 75 | 6,35 |
| 25 | - | 50 | 50 | 85 | 215 | - | - | 3-4 |
| 26 | - | 70 | 30 | ≥100 | 300 | - | - | 4,6 |
| 27 | - | 76 | 24 | ≥100 | ^{∼}320 | - | - | - |
| 28 | 6 | 76 | 18 | - | ^{∼}320 | - | - | - |
| 29 | 7 | 70 | 23 | 104 | 305 | - | - | 4,9 |
| 30 | 48 | 45 | 7 | 86,5 | amorphe | - | - | - |
| 31 | 10 | 60 | 30 | 82 | 275 | 224 | 52 | 4,9 |
| 32 | 15 | 70 | 15 | 94 | 310 | - | - | - |
| 33 | 30 | 60 | 10 | 81,7 | 288 | 244 | 44 | 4,5 |
| 34 | 20 | 60 | 20 | 90 | 280 | 221 | 59 | - |

### EXEMPLE 35

L'exemple de "contrôle n° 1" dans le brevet MITSUI (JP 62156130) indique un terpolyamide 12-6,T-6,I de composition molaire 10/55/35 correspondant à une teneur massique indiquée ci-après, de température de fusion 280°C et de HDT 108°C. Le polyamide de cet exemple est ensuite chargé de fibres de verre à 40% et l'on obtient une HDT de 160°C.

Un copolyamide 12-6,T selon la présente invention de composition massique 49/51 et de viscosité inhérente 1,47 a été chargé avec 40% de fibres de verre de longueur moyenne 4,5 mm. Le malaxage a été effectué sur une monovis Kaufman-Super 2-50, la vitesse de rotation de la vis est de 90 tr/mn, la température matière de 311°C et le débit matière de 26,4 kg/h.

On mesure la HDT (Heat Deforming Temperature), c'est-à-dire la température de fléchissement sous charge selon la norme ASTM D 648, sur des éprouvettes 6,4 x 12,7 x 63,5. Ces résultats sont consignés dans le tableau ci-après.

| | Contrôle exemple de MITSUI | copolyamide 12-6,T |
|---|---|---|
| 6,T, % en masse | 57 | 51 |
| 12, % en masse | 8 | 49 |
| 6,I, % en masse | 35 | 0 |
| température de fusion | 280°C | 273°C |
| HDT (1.82 MPa) non chargé | 108°C | 62°C |
| HDT (1.82 MPa) chargé 40% de fibres de verre | 160°C | 180°C |

Ainsi, la présente invention fournit des polyamides dont la teneur en motif aliphatique élevée ne diminue pas les propriétés mécaniques.

### Exemple 36

On introduit 21,4 g d'acide amino-12-dodécanoïque, 20,65 g d'acide térephtalique et 17,9 g de 1,8-diaminooctane (diamine en C8) dans le réacteur de l'exemple 1.

On plonge le réacteur dans un bain chauffant maintenu à 245°C; après 10 mn on initie l'agitation (25 tr/mn). On porte ensuite la température à 280°C (20 mn). On observe alors la distillation des effluents de polycondensation, le milieu devient transparent. On porte alors sur 30 mn la température du bain à 300°C, le milieu monte en viscosité, et l'agitation est diminuée. La réaction est ensuite arrêtée.

Le polyamide obtenu possède une viscosité inhérente de 0,90, une température de fusion de 275°C (on détecte sur la trace DSC un autre minimum de fusion à 245°C, mais d'amplitude faible) et une température de transition vitreuse de 80°C.

### Exemples 37 à 39

On opére dans les conditions de l'exemple 36 pour des polyamides de composition massique en 12/8,T de: 36/64, 39/61 et 42/58 respectivement.

Les résultats obtenus pour les exemples 36 à 39 sont reportés dans le tableau D ci-après.

**TABLEAU D**

| | % masse | | | | |
|---|---|---|---|---|---|
| Ex. | 12 | 8,T | Tg | Tf | ΔH cal/g |
| 36 | 33 | 67 | 80 | 275 | 8,3 |
| 37 | 36 | 64 | 79 | 268 | 7,3 |
| 38 | 39 | 61 | 77 | 265 | 6,4 |
| 39 | 42 | 58 | 77 | 260 | 5,5 |

### Exemple 40

Dans un autoclave, on charge 4,1 kg de lactame L12, 4,16 kg d'acide térephtalique et 2,0 kg d'HMDA (soit 68% de la stoechiométrie théorique). Le réacteur fermé est porté à 280°C puis maintenu à cette température pendant 90 mn (sous agitation à 30 tr/mn). La pression s'établit à 24 bar dans le réacteur. Ensuite, on effectue une détente jusqu'à une pression de 1 bar, sur une période de 60 mn. On introduit alors 0,86 kg d'HMDA (soit 68+29=97% de la stoechiométrie théorique). La pression dans le réacteur augmente alors pour se stabiliser à 7 bar. On maintient ensuite le mélange réactionnel à 280°C pendant une période de 90 mn. On effectue alors de façon conjointe une détente du réacteur et une montée en température afin d'atteindre 320°C et 1 bar (sur une période de 65 mn). Le produit déficitaire en fonction amine (97% de l'HMDA théorique) de viscosité inhérente 0,60 est sorti du réacteur, refroidi jusqu'à température ambiante puis broyé. 5 kg de ce produit sont mélangés avec 0,10 kg d'HMDA (soit les 3% restants et un excès stoechiométrique de 3% de fonctions NH₂/COOH). Le produit subit un passage sur une extrudeuse ZSK30 avec une température matière de 320°C.

On obtient alors un polymère présentant une viscosité inhérente de 0,90, une température de fusion de 295°C et une température de transition vitreuse de 85°C.

## Revendications

1. Polyamide comprenant, en masse:
a) 45 à 75% de motif x,T, x étant compris entre 4 et 12, bornes incluses, ledit motif x,T étant le produit de condensation d'une diamine ayant x atomes de carbone et d'acide térephtalique; et
b) 55 à 25% de motif aliphatique -NH-(CH₂)ₙ-CO, n étant compris entre 6 et 14.

2. Polyamide selon la revendication 1, comprenant, en masse:
a) 55 à 70% de motif x,T, x étant compris entre 4 et 12; et
b) 45 à 30% de motif aliphatique -NH-(CH₂)ₙ-CO, n étant compris entre 6 et 14.

3. Polyamide selon la revendication 1 ou 2, caractérisé en ce que, dans le motif x,T, x est compris entre 6 et 9.

4. Polyamide selon la revendication 3, caractérisé en ce que le motif x,T est le motif 6,T.

5. Polyamide selon l'une quelconque des revendications 1 à 4, caractérisé en ce que, dans le motif aliphatique -HN-(CH₂)ₙ-CO, n est compris entre 7 et 11.

6. Polyamide selon la revendication 5, caractérisé en ce que le motif aliphatique est le motif 12 et/ou 11.

7. Polyamide selon la revendication 6, caractérisé en ce que le motif aliphatique est le motif 12.

8. Polyamide selon la revendication 7, caractérisé en ce que le motif aliphatique 12 est issu du lauryllactame L12.

9. Polyamide selon l'une quelconque des revendications 1 à 8, caractérisé en ce qu'il comprend un tiers monomère remplaçant en partie le motif aliphatique -HN-(CH₂)ₙ-CO, ledit motif aliphatique étant présent en une proportion d'au moins 10% en masse, sur la base de la masse totale.

10. Polyamide selon la revendication 9, caractérisé en ce que ledit tiers monomère est le motif 6,I présent en une proportion jusqu'à 45% en masse, sur la base de la masse totale.

11. Polyamide selon la revendication 10, caractérisé en ce que ledit motif 6,I est présent en une proportion jusqu'à 30% en masse, sur la base de la masse totale.

12. Polyamide selon la revendication 8, caractérisé en ce que ledit tiers monomère est le motif 6 présent en une proportion jusqu'à 40% en masse, le motif x,T étant présent en une proportion d'au moins 50% en masse, sur la base de la masse totale.

13. Polyamide selon la revendication 12, caractérisé en ce que ledit motif 6 est jusque en une proportion jusque 30% en masse, sur la base de la masse totale.

14. Polyamide selon la revendication 12 ou 13, dans lequel le motif 6 est issu du caprolactame.

15. Polyamide selon l'une quelconque des revendications 9 à 14, caractérisé en ce que le motif aliphatique est présent en une proportion d'au moins 15% en masse, sur la base de la masse totale.

16. Polyamide selon l'une quelconque des revendications 9 à 15, caractérisé en ce que le motif aliphatique est présent en une proportion d'au moins 25% en masse, sur la base de la masse totale.

17. Polyamide selon l'une quelconque des revendications 1 à 15, comprenant de plus au moins une charge et/ou un additif conventionnel.

18. Polyamide selon la revendication 17, comprenant en tant que charge de la fibre de verre.

19. Objet, de préférence moulé, obtenu à partir de polyamide selon l'une quelconque des revendications 1 à 18.

## Patentansprüche

1. Polyamide, die in Masse-% enthalten:
a) 45 bis 75 % Einheiten x,T, wobei x im Bereich von 4 bis 12 (einschließlich der Bereichsgrenzen) liegt und die Einheit x,T das Kondensationsprodukt eines Diamins mit x Kohlenstoffatomen mit Terephthalsäure ist, und
b) 55 bis 25 % aliphatische Einheiten -NH-(CH₂)ₙ-CO, wobei n im Bereich von 6 bis 14 liegt.

2. Polyamide nach Anspruch 1, die in Masse-% enthalten:
a) 55 bis 70 % Einheiten x,T, wobei x im Bereich von 4 bis 12 liegt, und
b) 45 bis 30 % aliphatische Einheiten -NH-(CH₂)ₙ-CO, wobei n im Bereich von 6 bis 14 liegt.

3. Polyamide nach Anspruch 1 oder 2, dadurch gekennzeichnet, daß in der Einheit x,T x im Bereich von 6 bis 9 liegt.

4. Polyamide nach Anspruch 3, dadurch gekennzeichnet, daß die Einheit x,T die Einheit 6,T ist.

5. Polyamide nach einem der Ansprüche 1 bis 4, dadurch gekennzeichnet, daß in den aliphatischen Einheiten -HN-(CH₂)ₙ-CO n im Bereich von 7 bis 11 liegt.

6. Polyamide nach Anspruch 5, dadurch gekennzeichnet, daß die aliphatische Einheit die Einheit 12 und/oder 11 ist.

7. Polyamide nach Anspruch 6, dadurch gekennzeichnet, daß die aliphatische Einheit die Einheit 12 ist.

8. Polyamide nach Anspruch 7, dadurch gekennzeichnet, daß die aliphatische Einheit 12 von Lauryllactam L12 stammt.

9. Polyamide nach einem der Ansprüche 1 bis 8, dadurch gekennzeichnet, daß sie ein drittes Monomer enthalten, das einen Teil der aliphatischen Einheiten -HN-(CH₂)ₙ-CO ersetzt, wobei die aliphatischen Einheiten in einem Anteil von mindestens 10 Masse-%, bezogen auf die Gesamtmasse, vorliegen.

10. Polyamide nach Anspruch 9, dadurch gekennzeichnet, daß das dritte Monomer die Einheit 6,I ist und in einem Anteil von bis zu 45 Masse-%, bezogen auf die Gesamtmasse, vorliegt.

11. Polyamide nach Anspruch 10, dadurch gekennzeichnet, daß die Einheiten 6,I in einem Anteil von bis zu 30 Masse-%, bezogen auf die Gesamtmasse, vorliegen.

12. Polyamide nach Anspruch 8, dadurch gekennzeichnet, daß das dritte Monomer die Einheit 6 ist und in einem Anteil von bis zu 40 Masse-% vorliegt, wobei die Einheit x,T in einem Anteil von mindestens 50 Masse-%, bezogen auf die Gesamtmasse, vorliegt.

13. Polyamide nach Anspruch 12, dadurch gekennzeichnet, daß die Einheit 6 in einem Anteil von bis zu 30 Masse-%, bezogen auf die Gesamtmasse, vorliegt.

14. Polyamide nach Anspruch 12 oder 13, in denen die Einheit 6 von Caprolactam stammt.

15. Polyamide nach einem der Ansprüche 9 bis 14, dadurch gekennzeichnet, daß die aliphatische Einheit in einem Anteil von mindestens 15 Masse-%, bezogen auf die Gesamtmasse, vorliegt.

16. Polyamide nach einem der Ansprüche 9 bis 15, dadurch gekennzeichnet, daß die aliphatische Einheit in einem Anteil von mindestens 25 Masse-%, bezogen auf die Gesamtmasse, vorliegt.

17. Polyamide nach einem der Ansprüche 1 bis 15, die zusätzlich mindestens einen Füllstoff und/oder einen herkömmlichen Hilfsstoff enthalten.

18. Polyamide nach Anspruch 17, die als Füllstoff Glasfasern enthalten.

19. Gegenstände, vorzugsweise Formteile, die aus den Polyamiden nach einem der Ansprüche 1 bis 18 erhalten sind.

## Claims

1. Polyamide comprising, on a mass basis:
a) 45 to 75 % of x,T unit, x being between 4 and 12, inclusive of limits, the said x,T unit being the product of condensation of a diamine containing x carbon atoms and terephthalic acid; and
b) 55 to 25 % of aliphatic unit -NH-(CH₂)ₙ-CO, n being between 6 and 14 inclusive.

2. Polyamide according to Claim 1, comprising, on a mass basis:
a) 55 to 70 % of x,T unit, x being between 4 and 12 inclusive; and
b) 45 to 30 % of aliphatic unit -NH-(CH₂)ₙ-CO, n being between 6 and 14 inclusive.

3. Polyamide according to Claim 1 or 2, characterized in that, in the x,T unit, x is between 6 and 9 inclusive.

4. Polyamide according to Claim 3, characterized in that the x,T unit is the unit 6,T.

5. Polyamide according to any one of Claims 1 to 4, characterized in that, in the aliphatic unit -HN-(CH₂)ₙ-CO, n in between 7 and 11 inclusive.

6. Polyamide according to Claim 5, characterized in that the aliphatic unit is the unit 12 and/or 11.

7. Polyamide according to Claim 6, characterized in that the aliphatic unit is the unit 12.

8. Polyamide according to Claim 7, characterized in that the aliphatic unit 12 originates form lauryllactam L12.

9. Polyamide according to any one of Claims 1 to 8, characterized in that it contains a third monomer partly replacing the aliphatic unit -HN-(CH₂)ₙ-CO, the said aliphatic unit being present in a proportion of at least 10 mass %, based on the total mass.

10. Polyamide according to Claim 9, characterized in that the said third monomer is the unit 6,I present in a proportion of up to 45 mass %, based on the total mass.

11. Polyamide according to Claim 10, characterized in that the said unit 6,I is present in a proportion of up to 30 mass %, based on the total mass.

12. Polyamide according to Claim 8, characterized in that the said third monomer is the unit 6 present in a proportion of up to 40 mass %, the unit x,T being present in a proportion of at least 50 mass %, based on the total mass.

13. Polyamide according to Claim 12, characterized in that the said unit 6 is in a proportion of up to 30 mass %, based on the total mass.

14. Polyamide according to Claim 12 or 13, in which the unit 6 originates from caprolactam.

15. Polyamide according to any one of Claims 9 to 14, characterized in that the aliphatic unit is present in a proportion of at least 15 mass %, based on the total mass.

16. Polyamide according to any one of Claims 9 to 15, characterized in that the aliphatic unit is present in a proportion of at least 25 mass %, based on the total mass.

17. Polyamide according to any one of Claims 1 to 15, additionally containing at least one filler and/or a conventional additive.

18. Polyamide according to Claim 17, containing glass fibre as filler.

19. Object, preferably moulded, obtained from polyamide according to any one of Claims 1 to 18.
